# EUROPEAN PATENT APPLICATION

(11) **EP 3 144 087 A1**
(43) Date of publication of application: **22.03.2017**
(21) Application number: 15185890.9
(22) Date of filing: 18.09.2015
(51) Int. Cl.: B23C 5/00, B23C 5/22

(54) **A CUTTING TOOL, A TOOL BODY AND A METHOD FOR PRODUCING A TOOL BODY**

(71) Applicant: Sandvik Intellectual Property AB, 811 81 Sandviken (SE)
(72) Inventor: WIHLBORG, Lennart, SE-816 31 OCKELBO (SE)

(57) **Abstract**

A tool body (2) of a cutting tool comprises at least one insert pocket (3) having a bottom surface with a support face configured to provide support to a lower surface of an insert (4) to be received in the pocket and having at least one cutting edge (11) formed between a top surface and a side surface connecting the lower surface and the top surface. The bottom surface of the pocket has a countersunk central portion (15) surrounded by a peripheral bottom surface portion (16) configured to form the only support face of the bottom surface to the lower surface of an insert to be received in the pocket.

## Description

### TECHNICAL FIELD OF THE INVENTION

The present invention relates to a cutting tool according to the preamble of claim 1 comprising a tool body and at least one cutting insert, a tool body for such a cutting tool according to the preamble of claim 9 as well as a method for producing such a tool body.

The invention is especially directed to cutting tools for milling and will for that sake hereinafter mainly be discussed and illustrated for that particular application but is not at all restricted thereto. Said tool may just as well be used for other types of chip-removing machining, such as turning or drilling. Examples of conceivable milling procedures are face milling, profile milling, shoulder milling, ramping and interpolation.

Such milling tools have normally a plurality of, for example six, pockets to which a cutting insert is releasably fixed for enabling indexing of the cutting insert for changing the cutting edge used for chip-removing machining. It is of vital importance for the result of said machining and the lifetime of said cutting insert that the insert received in said pocket or seat of the tool body is properly supported in a fixed position therein. How the bottom surface of the pocket interacts with the lower surface of the insert received in the pocket is important for the support of the insert obtained in said pocket.

When a cutting insert for such a cutting tool is produced by pressing and sintering the lower surface of the insert will not be perfectly flat even if a CAD-model including compensations related to deviations in shape caused by sintering is used for achieving a flat lower surface. Inaccuracies in the shape of the press tool will also contribute to unpredictable surface imperfections. Some inserts allows a remedy to these deviations from the desired shape by surface grinding of the lower surface of the insert, but this is a time consuming technique and also difficult or impossible to carry out on some inserts, such as double-sided inserts with cutting edges raised in relation to the top and lower surface. Furthermore, inserts having a through-hole from the top surface to the lower surface for mounting the insert to the pocket by a screw may during the pressing/sintering thereof get a convex lower surface due to more dense compacting of the powder around the hole than in the periphery of the lower surface.

A varying and insufficient flatness of the lower surface of the insert is detrimental to obtaining a reliable and sufficient stability in the support of the insert mounted in the pocket of the tool. The unevenness and/or convexity of the lower surface of the insert will when applying this on a flat bottom surface of the pocket of the tool body, normally obtained through side milling, result in an irregular support face obtained between said bottom surface and lower surface of the insert. Furthermore, said convexity is positioned towards the centre of insert resulting in not only an unstable support of the insert in the pocket, but also a risk of fracturing the insert during machining, since the insert is not being supported sufficiently close to or below the active cutting edge thereof.

### BACKGROUND ART

US 8 096 735 discloses a cutting insert and a milling tool addressing the problems described above by manufacturing the insert for such a tool with said lower surface inclined towards a screw hole centrally located ensuring that the support face provided by the flat bottom surface of the pocket of the tool body will provide stable support to the insert by distancing the support from said screw hole and providing it closer to the cutting edge. However, a disadvantage of this approach is that a CAD-model compensation of the insert may nevertheless be required for obtaining the desired inclination of the lower surface thereof, and this compensation may be difficult to carry out properly since different cemented carbide powder grades act differently during sintering and may thereby require different compensations. Inaccuracies in the pressing method used and/or in the shape of the press tool may also contribute to deviations from the desired inclination on the lower surface of the insert. Furthermore, the contact between the insert and the bottom surface of the pocket is obtained in a restricted region of the insert having a negative influence upon the stability of the insert in the pocket and the durability and lifetime of the insert.

### SUMMARY OF THE INVENTION

The object of the present invention is to provide a cutting tool, a tool body and a method of the type defined in the introduction being improved in at least some aspect with respect to such cutting tools, tool bodies and methods already known.

This object is with respect to the cutting tool obtained by providing such a cutting tool with the features listed in the characterizing part of appended claim 1.

It is hereby ensured that the contact between the lower surface of the insert and the bottom surface of the pocket of the tool body will be obtained close to the periphery and close to the cutting edge of the insert by providing the bottom surface of the pocket with the countersunk central portion with a design adapted to the lower surface of the insert to be received in the pocket so as to be out of contact therewith and a peripheral portion surrounding the central portion configured to provide the only support face for the lower surface of the insert by supporting a portion of the lower surface of the insert bearing thereupon. This means that the insert may have an uneven and/or convex lower surface with a not exactly defined shape and a support close to the periphery of the insert may still be reliably provided by the bottom surface of the pocket without any requirement of delicate and costly compensating procedures carried out on the insert and/or in spite of unpredictable surface deviations on the lower surface due to irregularities in the pressing tool for producing the insert.

According to an embodiment of the invention the cutting insert comprises a substantially flat lower surface. "Substantially flat lower surface" is here to be interpreted as a lower surface being within a manufacturing tolerance from an intended flat lower surface. Even if the cutting insert is designed from a CAD-model for achieving a flat lower surface and this model includes a compensation for deviations from the final shape due to pressing and sintering of the cutting insert the final shape of the lower surface may nevertheless exhibit unpredictable deviations, such as small convexities and/or concavities, from the design making the actual lower surface only substantially flat. However, the design of the bottom surface of the pocket will then any way ensure that support to the cutting insert in the pocket is obtained only by a peripheral portion of the bottom surface at a location close to or below the cutting edge of the insert.

According to an embodiment of the invention the maximum distance perpendicular to the bottom surface of the pocket of the central portion of the support face to the peripheral portion is ≥ 5 x 10⁻³ x the largest dimension of the bottom surface. The largest dimension of the bottom surface is here defined as the greatest possible distance of two spots of the bottom surface, such as the diameter of the bottom surface would this be circular. Said maximum distance will ensure that manufacturing tolerances of a cutting insert from an intended flat lower surface may not result in any risk of contact of the lower surface of the insert other than to said peripheral portion of the bottom surface of the pocket. According to another embodiment of the invention the maximum distance perpendicular to the bottom surface of the pocket of the central portion to the support face of the peripheral portion is ≤1.0 x 10⁻¹ x the largest dimension of the bottom surface or ≤ 5 x 10⁻² x the largest dimension of the bottom surface. It has been found that such an upper limit for said maximum distance or depth of the countersunk central portion is enough to ensure that for a substantially flat or slightly convex design of the lower surface of an insert the lower surface of the insert will only be supported by said support face.

According to another embodiment of the invention the cutting insert has a central through-hole from the top surface to the lower surface thereof for securing it in the pocket by a screw penetrating into a hole with an inner thread in the central portion of the bottom surface of the pocket.

According to another embodiment of the invention the lower surface of the cutting insert is convex, and the countersunk central portion of the bottom surface of the pocket is more concave than the lower surface of the insert is convex so as to be out of contact therewith. It may in some cases be easier to deliberately produce a cutting insert with a convex lower surface than trying to make this flat, and also in such a case it will be ensured that the support to the lower surface of that insert will be provided where it is desired by this design of the countersunk central portion of the bottom surface of the pocket. It may furthermore in some cases be desirable to produce a cutting insert with a slightly convex lower (and upper) surface to achieve an insert with more material (strength) in an area around the screw through-hole in order to prevent fractures across the screw through-hole.

According to another embodiment of the invention the cutting insert is double-sided with at least one cutting edge formed also between the lower surface and the side surface thereof. Thus, the top surface and the lower surface will change place when turning the insert upside down in the pocket and they will also both face the same problems of unpredictable deviations, convexity etc. when manufacturing the insert and solved by the design of the bottom surface of the tool body.

According to an embodiment of the invention the cutting edges of said double-sided cutting insert are raised with respect to adjacent top and lower surface of the insert. The invention is particularly advantageous for such cutting inserts, since these inserts may not be subjected to surface grinding for obtaining the intended shape (e.g. flat and/or correctly inclined) on the top and lower surfaces. In other words, the cutting edges will form obstacles making it difficult or impossible to get rid of unpredictable deviations caused by manufacturing tolerances from the intended shape on the top and lower surface even by using such a time consuming technique as surface grinding. However, the design of the bottom surface of the pocket of the tool body of the cutting tool will nevertheless ensure that the surface of the cutting insert acting as lower surface will receive support by the bottom surface of the pocket only at peripheral portions thereof close to the cutting edges.

The object of the present invention is with respect to the tool body obtained by providing a tool body according to the independent claim directed to such a tool body. The advantages of such a tool body appear clearly from the above discussion or the cutting tool according to the invention.

According to an embodiment of the invention the bottom surface of the pocket has a wave structure as a result of a treatment thereof by a ball nose cutter. The wave structure resulting as a consequence of the treatment of the bottom surface of the pocket by a ball nose cutter for obtaining said countersunk central portion surrounded by said peripheral bottom surface portion is favourable for obtaining stable fastening of an insert in the pocket while supporting it close to the periphery thereof. The tops or peaks of the waves so obtained will be rather sharp and be deformed slightly when the insert is received in the pocket and urged with peripheral portions thereof against said peripheral portion of the bottom surface of the pocket resulting in a distribution of the support over a larger area improving the stability of the sit of the insert in the pocket. Furthermore, in a milling tool, such as a face or shoulder milling tool, the countersunk central portion of the bottom surface of the pocket is easily machined by tilting in the ball-nose cutter. Accordingly, the ball-nose cutter is suitable for machining the countersunk central portion due to said tilt when an adjacent pocket is presenting an obstacle in front of the pocket in which the countersunk central portion is machined.

According to another embodiment of the invention the depths of the waves of said wave structure, i.e. the distance between the tops separating two valleys and the bottom of a valley, is ≤ 0.05 mm.

According to another embodiment of the invention the central portion of the bottom surface of the pocket has a depth with respect to the support face of the peripheral portions starting at the border to the support face and increasing with the distance from the support face. This will ensure that the bottom surface of the pocket provides an initial desired width on the support face to the lower surface of an insert received in the pocket by a peripheral bottom surface portion. The countersunk central portion will hereby decline from said border toward the centre of the pocket, wherein the support face can grow somewhat inward from the border after deformation of the initial peripheral bottom surface portion when pressing the insert against the bottom surface of the pocket (without risking a contact between the inner parts of the lower surface and countersunk central portion).

According to another embodiment of the invention the central portion of the bottom surface of the pocket defines a recess in the bottom surface with a conical or a frustoconical shape. Such a shape of the central portion may be suitable to efficiently ensure that a support face to an insert is only provided by said peripheral bottom surface portion of the pocket, yet the conical or frustoconical shape is also an expedient way of allowing the support face to grow somewhat inwardly as in the previous embodiment mentioned above.

According to another embodiment of the invention the central portion of the bottom surface of the pocket extends towards the peripheral portion providing the support face along an arc with a centre above the central portion. Such a shape of the countersunk central portion is advantageous if the lower surface of an insert to be received in the pocket has a strong or irregular convexity.

According to another embodiment of the invention the central portion of the bottom surface of the pocket extends towards the peripheral portion providing the support face along an arc with a centre below the central portion. Such an extension may result in a smooth transition of the central portion to a peripheral bottom surface portion providing a support face to an insert over a large area.

According to another embodiment of the invention the bottom surface of the pocket has a step separating the support face of the peripheral bottom surface portion from the central portion and making this countersunk with respect to the peripheral bottom surface portion. The step may then according to another embodiment of the invention be formed by walls of the bottom surface extending from the central portion while making an angle of 70°-95° or 80°-90° therewith. Such a step will define a distinct border at which the support face of the peripheral bottom surface portion starts, which will be favourable in some cases.

The object of the present invention is with respect to the method for producing a tool body obtained by providing a method according to the independent claim directed to such a method.

By subjecting a central portion of the bottom surface of at least one pocket to treatment by a ball nose cutter removing material therefrom to form a countersunk central portion surrounded by a peripheral bottom surface portion so as to make the bottom surface to provide an insert support face only by this peripheral bottom surface portion a tool body ensuring that support face to an insert received in the pocket of the tool body is obtained close to the periphery of the insert and to the cutting edge of the insert is reliably achieved in a cost efficient way. The use of a ball nose cutter for obtaining the countersunk central portion makes it possible to easy vary the appearance of this central portion according to different situations and objects to be carried out by a tool. Furthermore, as previously mentioned, the countersunk central portion of the bottom surface of the pocket is easily machined by tilting in a ball-nose cutter, i.e. the ball-nose cutter is suitable for machining the countersunk central portion due to said tilt when an adjacent pocket is presenting an obstacle in front of the pocket in which the countersunk central portion is machined.

According to an embodiment of the invention the treatment by the ball nose cutter is carried out by moving the tip thereof along a path resulting in a wave shaped surface structure with a depth of said central portion starting at the border to the peripheral surface portion and increasing with the distance to this peripheral bottom surface portion of the pocket.

According to another embodiment of the invention the treatment is carried out along paths positioned so as to result in a number of waves/area of the bottom surface varying over the bottom surface of the pocket. This may be of particular advantage when also the peripheral bottom surface portion of the bottom surface of the pocket is subjected to treatment by a ball nose cutter, since the height of the waves may there by adapted to the fact that the peripheral bottom surface portion will form a support face providing support to an insert.

According to another embodiment of the invention the treatment by the ball nose cutter is carried out along a path extending adjacent to the peripheral bottom surface portion providing an insert support face and running gradually further away from this portion. Thus, the ball nose cutter is moved towards the centre of the bottom surface of the pocket in this embodiment.

According to another embodiment of the invention the treatment by the ball nose cutter is carried out by moving the tip thereof in paths according to a ring with a perimeter decreasing with an increasing distance to the peripheral bottom surface portion, which constitutes another option for obtaining an appearance of the bottom surface of the pocket of the tool body aimed at.

According to another embodiment of the invention the treatment of the ball nose cutter is carried out by moving a tip thereof along paths extending gradually from the peripheral bottom surface portion to a mid portion of the central portion of the bottom surface of the pocket while making them deeper in the direction towards said mid portion.

According to another embodiment of the invention the method comprises an additional step of subjecting the part of the bottom surface of the pocket subjected to treatment by a ball nose cutter to a shot peening. The shot peening may deform the tops of the waves resulting from the treatment by the ball nose cutter slightly producing pressure tensions in the bottom surface of the pocket making the material harder at the surface, and the shot peening will also take care of removal of possible tops of said waves being too high and otherwise possibly reaching the lower surface of the insert received in the pocket where this lower surface shall not be supported.

Other advantageous features as well as advantages of the present invention appear from the description following below.

### BRIEF DESCRIPTION OF THE DRAWINGS

With reference to the appended drawings, below follows a specific description of embodiments of the invention cited as examples.

In the drawings:
- Fig. 1: shows a perspective view of a milling tool according the present invention,
- Fig. 2: is a perspective view of a cutting insert to be received in a pocket of a tool body in the milling tool according to the present invention,
- Fig. 3: is a perspective view of a portion of a tool body with a pocket for a cutting insert according to an embodiment of the invention,
- Fig. 4: is a cross-section view illustrating how the insert shown in Fig. 2 is received in the pocket of the tool body shown in Fig. 1,
- Fig. 5-8: are simplified views illustrating different ways of subjecting a bottom surface of a pocket of a tool body according to the present invention to treatment by a ball nose cutter, and
- Fig. 9-14: illustrate schematically different shapes of the bottom surface of a pocket of a tool body according to different embodiments of the present invention.

### DETAILED DESCRIPTION OF THE INVENTION

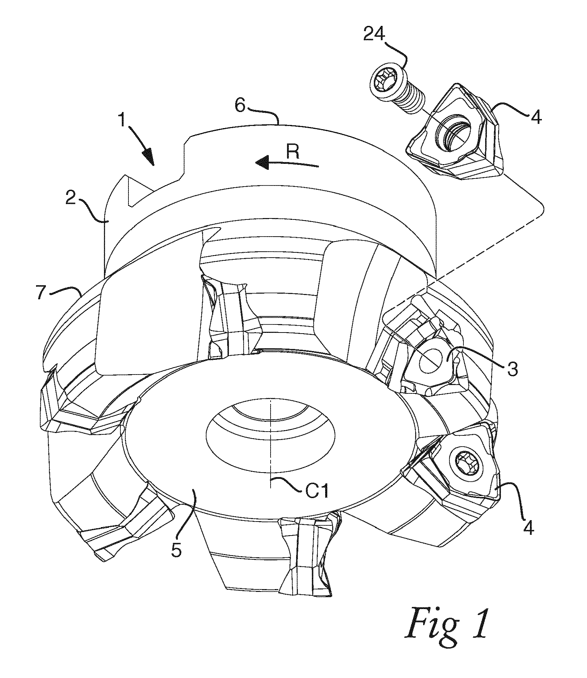

A milling tool 1 according to an embodiment of the invention is shown in Fig. 1. The tool comprises a tool body 2 having six seats or pockets 3 each receiving a double-sided cutting insert 4 releasably fixed to the pocket. The tool body 2 includes a front end 5 and a rear end 6 between which a central rotation axis C1 extends around which the tool is rotatable in a direction of rotation R. The pockets 3 are formed in a transition between the front end and an envelope surface 7 extending between the front end and the rear end of the tool body.

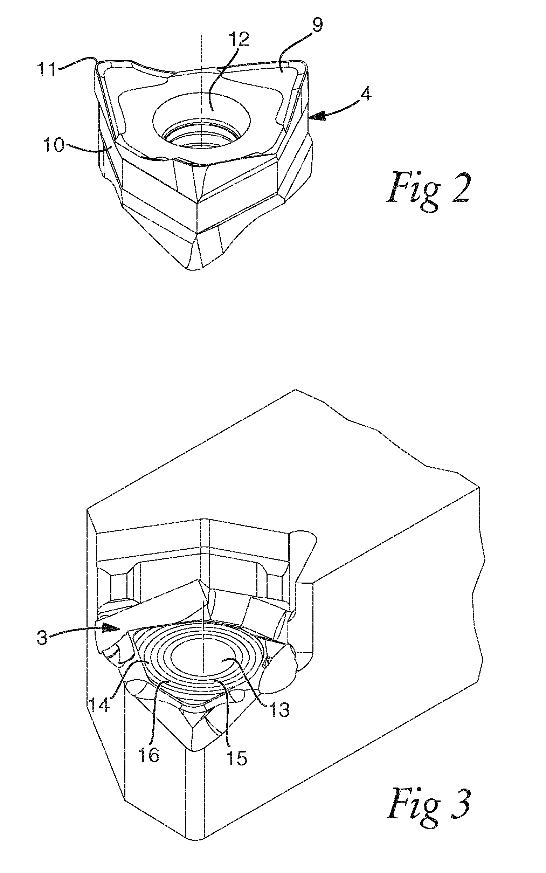

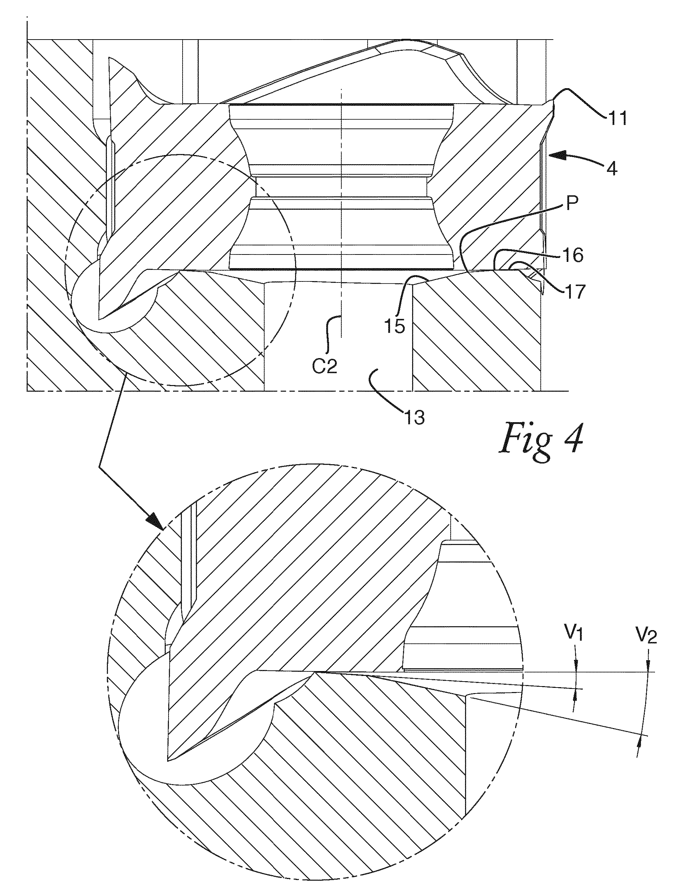

Fig. 2 shows a cutting insert 4 included in the milling tool and being double-sided or reversible, which means that the top and bottom thereof have the same design, but the side shown with the orientation of the insert in the figure as the upper side will hereinafter be called the top, although it may just as well be the bottom or lower side of the insert. Accordingly, the insert has as seen in this figure a hidden lower surface 8 a top surface 9 and a surrounding side surface 10 connecting the lower surface and the top surface. The cutting insert is trigonal and has three raised cutting edges 11 formed between the top surface and the side surface and the side surface and the lower surface acting as the top surface when the insert is reversed. The insert has a central through-hole 12 from the top surface to the lower surface thereof for securing it in the pocket by a screw penetrating into a hole 13 (see Fig. 3 or 4) with an inner thread in a central portion of a bottom surface of the pocket. The insert 4 is made of cemented carbide by pressing a powder mixture, which after sintering may exhibit unpredictable deviations in the shape, on the top and lower surface, of the cutting insert.

The general structure of the pocket will now be described while making reference to Figs. 3 and 4. Fig. 3 is illustrating a pocket 3 in a tool for turning and Fig. 4 is illustrating a cross-section of the milling insert mounted in the pocket of the milling tool of Fig. 1. The bottom surface 14 of the pocket 3 has a countersunk central portion 15 with a design adapted to the lower surface 8 of an insert 4 to be received in the pocket so as to be out of contact therewith and a peripheral portion 16 surrounding the countersunk central portion configured to provide the only support face for the lower surface of the insert by supporting a portion 17 (see Fig. 4) bearing thereupon. The peripheral portion 16 of the bottom surface has in the embodiment shown in Fig 4 an inclination (angle V1) with respect to a plane perpendicular to the central axis C2 of the hole 13 and this inclined portion connects at a point p to a more inclined portion (angle V2) for forming the countersunk central portion 15 of the bottom surface of the pocket.

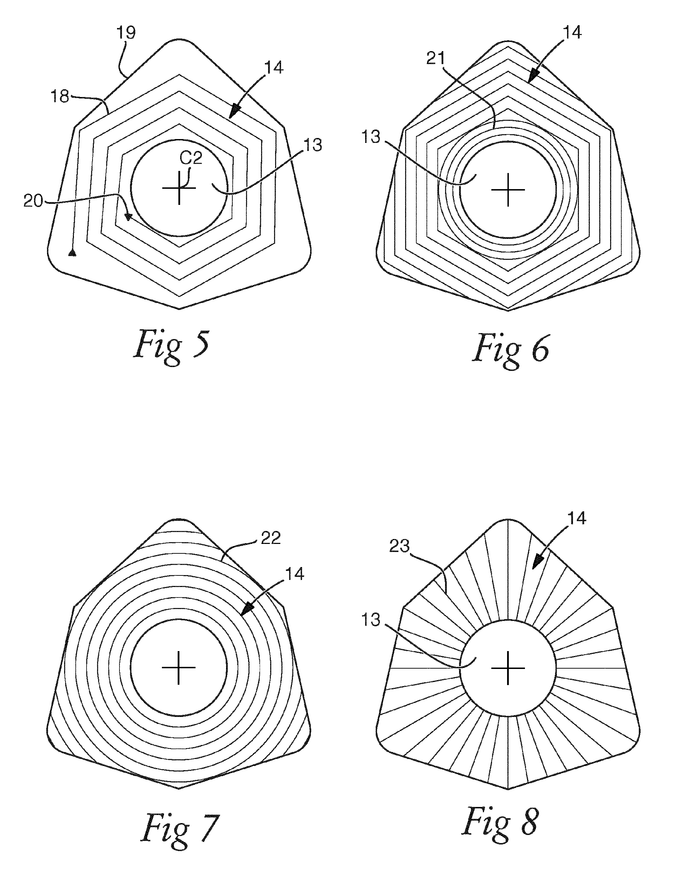

The bottom surface 14 of the pocket has a wave structure as a result of a treatment thereof by a ball nose cutter. Thus, the countersunk central portion and the peripheral portions surrounding this central portion of the bottom surface of the pocket are formed by a treatment of the bottom surface by a ball nose cutter. Some of an amount of possible ways of carrying out said treatment of the bottom surface by a ball nose cutter are illustrated in Figs. 5-8 and all these treatments are carried out while making the bottom surface deeper closer to the hole 13 for displacing the support face for providing support to an insert towards the periphery of the bottom surface.

It is shown in Fig. 5 how the treatment is carried out by moving the tip of the ball nose cutter along a path 18 extending along the peripheral edge 19 of the bottom surface and running gradually further inwardly to finally reach a region of said hole at a location 20. Beside this movement of the tip of the ball nose cutter in the XY-plane perpendicular to the axis C2 of the through-hole 13 it is also subjected to a continuous or stepwise feeding in the direction perpendicular thereto for obtaining an inclination of the bottom surface towards said hole. It is also possible to start the treatment from the position 20 and move in the other direction outwardly towards the periphery edge 19 of the bottom surface. It is then also conceivable to treat some parts of the bottom surface by paths closer to each other, for example in the region which will form the peripheral bottom surface portion providing said support face.

Fig. 6 illustrates a treatment by a ball nose cutter by moving the tip thereof in paths 21 forming rings with a decreasing perimeter with an increasing distance to a peripheral bottom surface portion.

Fig. 7 illustrates how these rings are formed by circular paths 22 carried out by the ball nose cutter for obtaining the countersunk central portion and the peripheral portion of the bottom surface aimed at.

Fig. 8 illustrates how the tip of the ball nose cutter is moved along paths 23 pointing to the centre of the hole 13 in the bottom surface of the pocket.

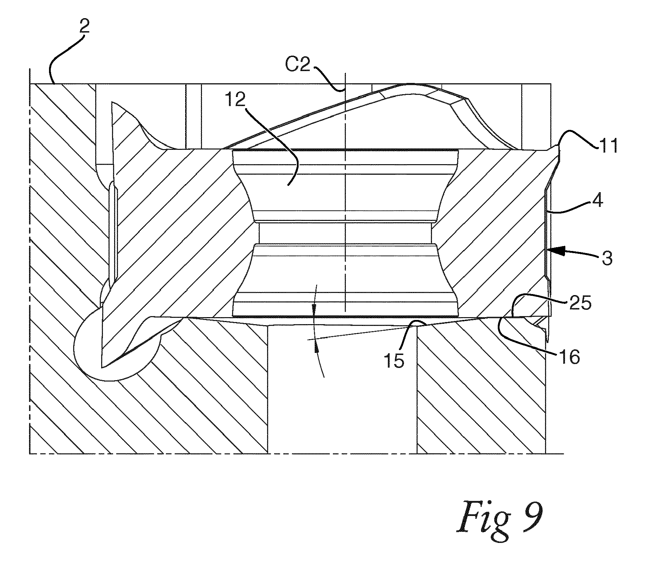

Fig. 9 illustrates schematically how an insert 4 of a cutting tool according to the invention is secured to a pocket 3 of a tool body 2 of a cutting tool according to the invention by a fastening means in the form of a screw not shown (see 24 in Fig 1) pressing peripheral portions 25 of the insert against a support face provided by a peripheral portion 16 of the bottom surface of the pocket while leaving a clearance of this bottom surface to the lower surface of the insert by the countersunk central portion 15 thereof. The threaded hole 13 in the bottom surface of the pocket may be slightly offset with respect to the through-hole 12 in the insert 4 enabling the screw 24 to also urge radial or axial support surfaces of the insert provided by the surrounding side surface 10 thereof to bear under pretension against contact surfaces of the pocket when the screw is tightened. The centre of the countersunk central portion 15 of the bottom surface of the pocket may have a corresponding offset with respect to the through-hole 12 of an insert to be received in the pocket for improving the stability of an insert secured in the pocket further.

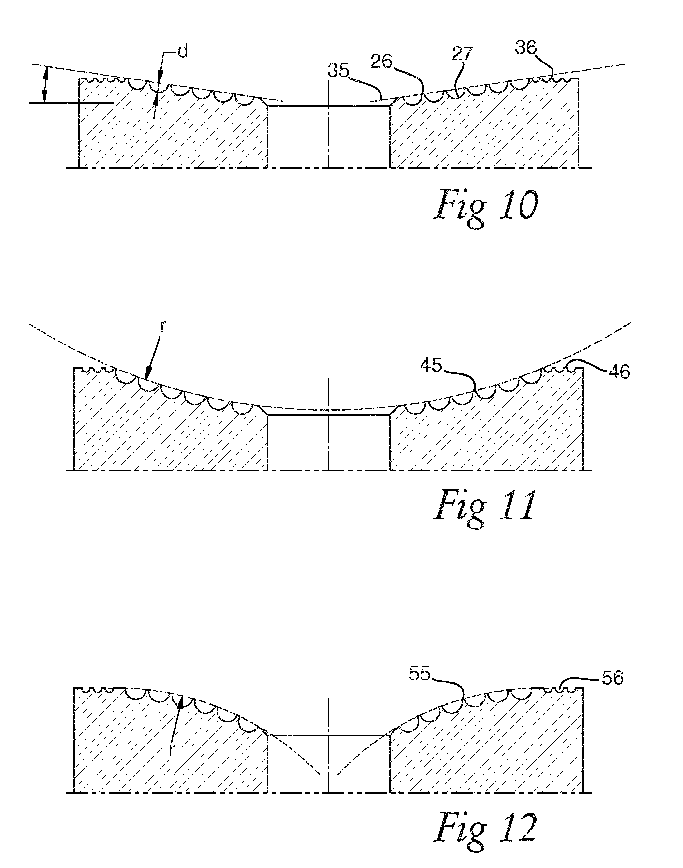

Figs. 10-12 illustrate schematically possible appearances of the bottom surface of a pocket as a result of a treatment by a ball nose cutter. Fig. 10 shows how the countersunk central portion 35 of the bottom surface of the pocket has a conical or frustoconical shape. It is shown how the wave structure resulting from the treatment by a ball nose cutter has tops 26 and valleys 27, and the depth d is ≤ 0.05 mm. The tops 26 of the wave structure in the peripheral portion 36 of the bottom surface will be slightly deformed when pressing an insert thereupon increasing the surface contact between the lower surface of the insert and the bottom surface of the pocket.

Fig. 11 illustrates another possible appearance of the bottom surface of the pocket, in which the countersunk central portion 45 extends towards the peripheral portion 46 providing the support face along an arc r with the centre above the countersunk central portion, whereas Fig. 12 shows an extension of the countersunk central portion 55 extending towards the peripheral portion 56 providing the support face along two arcs r with the centres below the countersunk central portion 55. It should be mentioned that the arcs may hereby be provided with several different radii of curvature and centres (above and below) the countersunk central portion in order to provide the concave and convex shape of the extension of the countersunk central portion of Fig. 11 and 12 respectively.

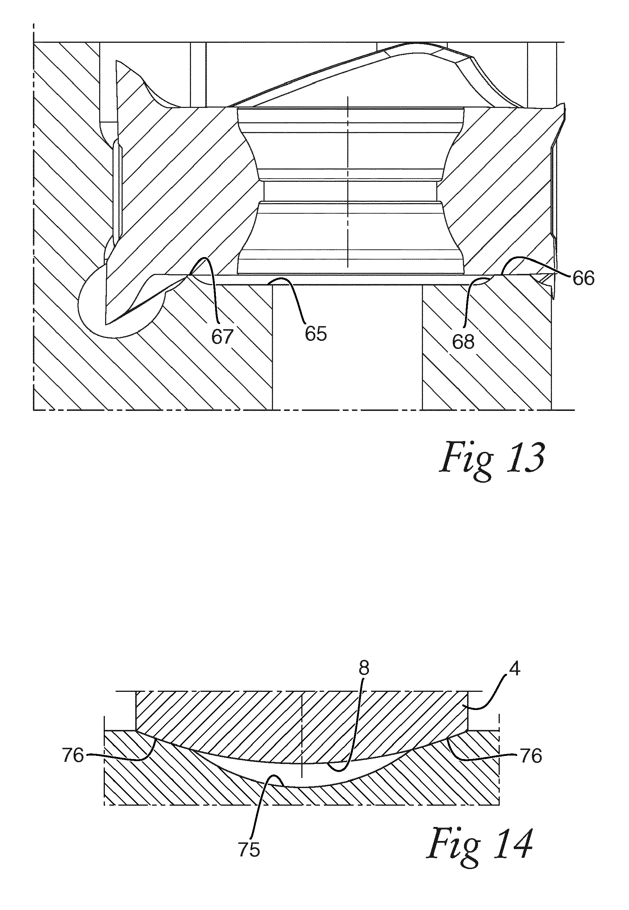

Fig. 13 illustrates another possible shape of a bottom surface of a pocket of a tool body of a cutting tool according to the present invention, in which the countersunk central portion 65 is formed by a flat portion at a lower level than a peripheral portion 66 of the bottom surface configured to provide the only support face for a lower surface of an insert, and the countersunk central portion 65 may be created by a ball nose cutter or any other suitable means. Accordingly, the bottom surface of the pocket has a step 67 formed by walls 68 extending from the central portion 65 while making an angle of nearly 90° therewith. The walls 68 have a very limited extension, i.e such that the maximum distance perpendicular to the bottom surface of the pocket of the countersunk central portion to the support face of the peripheral portion is ≥ 5 x 10⁻³ x the largest dimension of the bottom surface and/or ≤ 1.0 x 10⁻¹ x the largest dimension of the bottom surface or ≤ 5 x 10⁻² x the largest dimension of the bottom surface.

Fig. 14 shows another possible design of the bottom surface of the pocket of a tool body according to the present invention, in which the countersunk central portion 75 is more concave than the lower surface 8 of an insert 4 schematically indicated is convex so as to be out of contact therewith, whereas the peripheral bottom surface portion 76 is substantially as concave as the lower surface of the insert is convex.

The invention is of course not restricted to the embodiments thereof described above, but many possibilities to modifications thereof would be apparent to a person with skill in the art without departing from the scope of the invention as defined in the appended claims.

It is pointed out that the insert of the tool body of a cutting tool according to the present invention may have any conceivable shape and is not restricted to any number of cutting edges or design of surfaces thereof, but the lower surface may even be concave or have any other possible shape, and the insert may just as well be single-sided as double-sided.

When moving the ball nose cutter over the bottom surface of a tool body pocket this may be done along paths intersecting each other resulting in a thorny structure of the bottom surface. "Wave structure" used in this disclosure is to be interpreted broadly and to cover also such a partially thorny structure.

## Claims

1. A cutting tool, comprising:
• a tool body (2) having at least one pocket (3),
• at least one cutting insert (4) releasably fixed to the pocket, the insert having a lower surface (8), a top surface (9), a surrounding side surface (10) connecting the lower surface and the top surface and at least one cutting edge (11) formed between the top surface and the side surface,
the pocket having a bottom surface (14) with a support face configured to provide support to the lower surface of the insert, and
• fastening means (13, 24) configured to secure the insert in the pocket while pressing portions of the lower surface of the insert against the support face,
**characterized in that** the bottom surface of the pocket has a countersunk central portion (15, 35, 45, 55, 65, 75) with a design adapted to the lower surface (8) of the insert to be received in the pocket so as to be out of contact therewith and a peripheral portion (16, 36, 46, 56, 66, 76) surrounding the central portion configured to provide the only support face for the lower surface of the insert by supporting a portion of the lower surface of the insert bearing thereupon.

2. A cutting tool according to claim 1, **characterized in that** the cutting insert (4) comprises a substantially flat lower surface.

3. A cutting tool according to claim any of the preceding claims, **characterized in that** the maximum distance perpendicular to the bottom surface of the pocket of the countersunk central portion to the support face of the peripheral portion is ≥ 5 x 10⁻³ x the largest dimension of the bottom surface.

4. A cutting tool according to any of the preceding claims, **characterized in that** the maximum distance perpendicular to the bottom surface of the pocket of the countersunk central portion to the support face of the peripheral portion is ≤ 1.0 x 10⁻¹ x the largest dimension of the bottom surface or ≤ 5 x 10⁻² x the largest dimension of the bottom surface.

5. A cutting tool according to any of the preceding claims, **characterized in that** the cutting insert (4) has a central through-hole (12) from the top surface to the lower surface thereof for securing it in the pocket by a screw (24) penetrating into a hole (13) with an inner thread in the central portion of the bottom surface of the pocket.

6. A cutting tool according to any of the preceding claims, **characterized in that** the lower surface of the cutting insert (4) is convex, and that the countersunk central portion of the bottom surface of the pocket is more concave than the lower surface of the insert is convex so as to be out of contact therewith.

7. A cutting tool according to any of the preceding claims, **characterized in that** the cutting insert (4) is double-sided with at least one cutting edge (11) formed also between the lower surface (8) and the side surface (10) thereof.

8. A cutting tool according to claim 7, **characterized in that** the cutting edges (11) of the cutting insert (4) are raised with respect to adjacent top (9) and lower (8) surface of the insert.

9. A tool body of a cutting tool, comprising at least one insert pocket (3) having a bottom surface (14) with a support face configured to provide support to a lower surface (8) of an insert to be received in said pocket and having at least one cutting edge (11) formed between a top surface and a side surface connecting the lower surface and the top surface, **characterized in that** the bottom surface of the pocket has a countersunk central portion (15, 35, 45, 55, 65, 75) surrounded by a peripheral bottom surface portion (16, 36, 46, 56, 66, 76) configured to form the only support face of the bottom surface to the lower surface of an insert (4) to be received in the pocket.

10. A tool body according to claim 9, **characterized in that** the bottom surface (14) of the pocket has a wave structure as a result of a treatment thereof by a ball nose cutter.

11. A tool body according to claim 10, **characterized in that** the depths of the waves of said wave structure, i.e. the distance between a top (26) separating two valleys (27) and the bottom of a valley, is ≤ 0.05 mm.

12. A tool body according to any of claims 9-11, **characterized in that** the central portion (15, 35, 45, 55, 65, 75) of the bottom surface of the pocket has a depth with respect to the support face of the peripheral bottom surface portion (16, 36, 46, 56, 66, 76) starting at a border to the support face and increasing with the distance from this support face.

13. A tool body according to any of claims 9-12, **characterized in that** the central portion (35) of the bottom surface (14) of the pocket defines a recess in the bottom surface with a conical or frustoconical shape.

14. A tool body according to any of claims 9-13, **characterized in that** the central portion (45) of the bottom surface of the pocket extends towards the peripheral portion providing the support face along an arc with a centre above the central portion.

15. A tool body according to any of claims 9-13, **characterized in that** the central portion (55) of the bottom surface of the pocket extends towards the peripheral portion providing the support face along an arc with a centre below the central portion.

16. A tool body according to any of claims 9-11, **characterized in that** the bottom surface of the pocket has a step (67) separating the support face of the peripheral bottom surface portion (66) from the central portion (65) and making this countersunk with respect to the peripheral bottom surface portion.

17. A tool body according to claim 16, **characterized in that** the step (67) is formed by walls (68) of the bottom surface extending from the central portion (65) while making an angle of 70°-95° or 80°-90° therewith.

18. A method for producing a tool body according to any of claims 9-17, **characterized in that** it comprises the step of subjecting a central portion of the bottom surface (14) of the at least one pocket to treatment by a ball nose cutter removing material therefrom to form a countersunk central portion (16, 36, 46, 56) surrounded by a peripheral bottom surface portion (15, 35, 45, 55) so as to make the bottom surface to provide an insert support face only by this peripheral bottom surface portion.
